# EUROPEAN PATENT SPECIFICATION

(11) **EP 0 846 484 B1**
(45) Date of publication and mention of the grant of the patent: **21.02.2001**
(21) Application number: 97120817.8
(22) Date of filing: 27.11.1997
(51) Int. Cl.: B01D 17/022

(54) **Device for separating residual oils from condensate liquid in compressed air systems**
Vorrichtung zum Abscheiden von Ölrückständen aus einem Kondensat in Druckluftanlagen
Dispositif pour séparer des huiles résiduelles de condensat dans des systèmes d'air comprimé

(30) Priority: 06.12.1996 IT MI960805 U
(43) Date of publication of application: 10.06.1998
(73) Proprietor: ING. ENEA MATTEI S.p.A., I-20090 Vimodrone Milano (IT)
(72) Inventor: Fumagalli, Giorgio, 20046 Biassono, Milano (IT)
(74) Representative: Petruzzelli, Antonio European Patent Attorney

(56) References cited:
- EP-A- 0 436 773

## Description

The present invention refers to a device for separating residual oils from condensate liquid in compressed air systems.

The invention refers in particular to a device for separating residual oils from condensate liquid which makes use of a separator or separation filter to separate the condensate water and condensate oils contained in the condensate liquid, known in the sector as a coalescence separator.

A drawback of coalescence type separators is that these separators do not operate effectively in the presence of air, which is inevitably present in systems used for discharging condensate from compressed air systems in which said condensate discharge is effected on the basis of time-operated devices, namely devices in which condensate discharge is controlled at predetermined intervals and for predetermined lengths of time regardless of whether condensate requiring evacuation is actually present.

The absence of condensate at the time of discharge activation causes the discharge of air, which mixes with the condensate liquid already discharged thereby preventing it from being correctly filtered by the coalescence separator.

Furthermore the aforementioned coalescence separators require a given pressure value upstream of the separator in order to assure proper separation of water and residual condensate oils.

A device for separating residual oils from condensate liquid of the conventional type includes a condensate separator to separate the condensate liquid from the air contained in it, connected up in such a way as to convey the condensate liquid to a coalescence separator, used to separate the condensate water from the residual oil.

In said conventional type of water-oil separation device, said condensate separator or condenser directly discharges the air produced outside the condenser itself by way of a normally-open closure valve, while the pressure required for suitable separation of the aqueous and oil fractions of the condensate liquid in said coalescence separator is provided by using a compressed air offtake from said compressed air system. Said offtake is connected to said condenser by way of a special pipe incorporating a solenoid valve which opens when the required working pressure is to be delivered to the condensate liquid.

This offtake pipe and corresponding solenoid valve constitute an excessive complication of the conventional device as regards both the set-up of the offtake pipe itself and electronic components used to control the corresponding solenoid valve.

It should also be noted that to avoid sharp rises in pressure liable to create a hydraulic ram effect in the coalescence separator thereby damaging the separator itself, the inlet of these condensate separators consists of a small hole which prevents the aforementioned hydraulic ram effect from arising but which nonetheless can easily be obstructed if the flow into the separator is not filtered to remove particles of dirt or residues.

The conventional device therefore incorporates a filter for removing particles of dirt or residue, which is located upstream of the water-oil separator but downstream of said separation condenser used to separate air from the condensate liquid. This location of the residual particle filter is unfavourable in that these dirt particles are not filtered out until they reach the coalescence separator and are therefore still present in the discharged condensate liquid. These residual particles are liable to deposit on the components of the condensate separator discharge valves, thereby damaging them and/or making it necessary for them to be dismantled and cleaned periodically. Also in EP-A 0 436 773 is disclosed a process for separating oil from the water phase of a condensate liquid, wherein a pressure is applied to the liquid mass by means of a specific valve controlled pipe system in order to push the condensate liquid in the coalescence separator and consequently to allow separation of the aqueous and oil fraction of the condensate liquid.

The aim of this invention is therefore to provide a device for separating residual oils from condensate liquid in compressed air systems, in particular a separation device of the coalescence type that uses a separator or separation filter to separate the water from the residual oils in the condensate liquid, thereby obviating the aforementioned drawbacks and in particular making it unnecessary to use specific compressed air offtake pipes from the main system and the corresponding solenoid valves.

Another aim of this invention is to provide a device for separating residual oils from condensate liquid in compressed air systems which can be applied to systems already set-up or built, thereby making it unnecessary to perform costly and inconvenient work on the existing system.

The aforementioned aims are achieved, in accordance with what has been set out in claims 1 and 5, by providing a device for separating residual oils from condensate liquid in compressed air systems, of the type that includes a condensate separator to separate condensate liquid from air, which is connected up in such a way as to convey condensate liquid to a coalescence separator for separating the condensate water from the residual oil, the device furthermore incorporating a filter to remove residual particles, characterised by the fact that it incorporates a threshold valve capable of discharging air separated from the condensate liquid in said condensate separator upon reaching a predetermined air pressure level in said condensate separator in such a way that said predetermined air pressure level is able to provide said condensate liquid with the pressure required for it to be appropriately separated in said coalescence separator for separating condensate water from residual oil.

In this manner the use of the threshold valve for discharging the air separated from the condensate liquid in said condensate separator upon reaching a predetermined air pressure level in said condensate separator allows the required pressure to be delivered to said condensate liquid without any need to provide dedicated compressed air offtake pipes from the main system or relative solenoid valves, as is the case with the device used in conventional technology, thereby obtaining a separation device with an extremely simple structure and lower construction costs than those of the analogous device of conventional technology.

Furthermore, the device can also be applied to systems which are already set up or built without having to perform costly and inconvenient work on the systems to provide the aforementioned pipe for the air used to compress the condensate liquid.

This invention will be better understood upon reading the description that follows relating to a circuit diagram for a preferred implementation of the invention, to be read with reference to the sole attached figure.

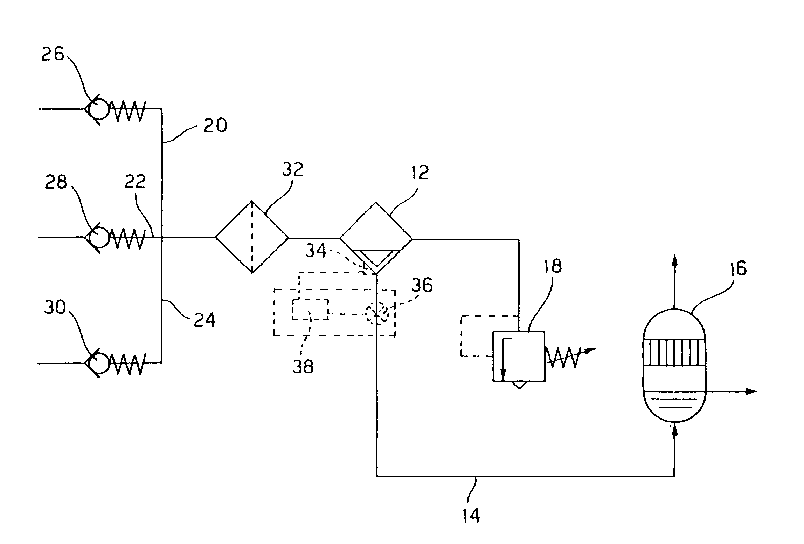

The sole figure shows a device for separating residual oils from condensate liquid in compressed air systems which includes a condensate separator 12 to separate condensate liquid from air connected up by way of a pipe 14 to convey the condensate liquid to a coalescence separator 16 which separates the condensate water from the residual oil.

This coalescence separator is of the type that will be entirely familiar to engineers in the sector, so a detailed description is unnecessary. Downstream of said coalescence separator the residual oils and the condensate water are collected in respective containers, again in an entirely familiar fashion that does not require a specific description.

The device also includes threshold valve 18 which discharges the air separated from the condensate liquid in said condensate separator 12 upon reaching a predetermined air pressure level inside said condensate separator 12.

This predetermined pressure level inside the condensate separator 12 therefore allows said condensate liquid accumulated in condenser 12 to be given the pressure needed for it to be sent via pipe 14 to the coalescence separator 16 in such a way as to separate the condensate water adequately and conveniently from the residual oil.

In practice said threshold valve 18 takes the form of a valve with a shutter closed by a return spring which can be appropriately calibrated to vary the pressure of liquid that said valve 18 allows to be discharged.

As shown in the figure, the condenser 12 receives the condensate liquid still containing compressed air from the line by way of a series of condensate liquid pipes 20,22,24 on which suitable check valves 26, 28, 30 are installed to prevent the backflow of condensate liquid towards the main system.

Said threshold valve 18 is regulated in such a way that the pressure level of the air that can be discharged corresponding to the predetermined pressure level that it is desirous to maintain inside the condenser 12 is lower than the air pressure level of the system to which the device is connected, thereby allowing for effective intake of said condensate liquid into the device.

The device also includes a filter 32 to remove impurities and residual particles, said filter being chosen of adequately fine mesh for the filtering of such impurities.

Said filter 32 for removing residual particles is placed upstream of said condensate separator 12 between the latter and check valves 26, 28, 30 in such a way that all impurities are prevented from entering the condenser 12 and are hence unable to encrust and/or obstruct any valve component or liquid flow component of the condenser 12 or downstream of the latter.

Clearly it would likewise be feasible to use a condenser 12 incorporating said filter for impurities 32 instead of using a separate filter for impurities 32 and condenser 12 as shown in the present preferred application of the invention. In this case said condensate separator 12 containing said filter would obviously have said filter for impurities located upstream of the valve components for discharge of condensate liquid from the condenser to forestall any risk of encrustation and obstruction which might otherwise arise.

The figure shows that the preferred condensate separator 12 is of the automatic discharge type, namely the type in which the presence of a liquid inside the condenser causes said liquid to be discharged from said condenser 12.

This automatic condensate liquid discharge condenser can be of the type that uses a level sensor which upon reaching a given liquid level inside the lower collection tank of the condenser actuates the opening of the shutter of a discharge valve on the bottom of said condenser 12, thereby introducing said condensate liquid into pipe 14. This automatic discharge device controlled by the level of liquid in the condenser 12 may for example be of the fully mechanical type using a float which mechanically actuates the shutter of said discharge valve.

Alternatively, a preferred implementation (shown by a dashed line in the sole figure) entails the use of a liquid detection sensor 34 that takes the form of a jumper or open electrical contact located on the bottom of the lower collection tank of the condenser 12 such that the presence of said condensate liquid makes an electrical connection between the two contacts of the sensor. Said closure of the contacts of the sensor 34 caused by the presence of condensate liquid generates an electrical signal that actuates the opening of the shutter of a solenoid valve 36 which discharges condensate liquid from the condenser 12.

Said discharge solenoid valve 36 is likewise time-controlled by way of a suitable electronic control circuit 38, which is of an entirely conventional type and therefore requires no specific description.

Both control systems of the solenoid valve 36 must be set up in such a way that the valve shutter opens when permitted both by the time and by the sensor 34 which detects the presence of liquid in the condenser tank.

In the absence of a positive liquid presence signal, the timer actuates the solenoid valve 36 at predetermined intervals for a fraction of a second to open the shutter of said solenoid valve, thereby keeping said valve operative which would otherwise risk remaining inoperative for an excessively long time, thereby accumulating encrustations and reducing its functionality.

The device may be associated with an air compressor and incorporated within the framework of the compressor itself.

It must obviously be understood that what is written and illustrated herein with reference to the preferred application of the present invention has been given purely as an example of a possible application without restricting the scope of the principle which is being claimed.

## Claims

1. A device for separating residual oils from condensate liquid in compressed air systems of the type that incorporates a condensate separator (12) to separate the condensate liquid from the air, connected to a coalescence separator (16) in which the condensate water of the condensate liquid is separated from the residual oil, characterized in that the device also includes a filter (32) to remove residual particles, and incorporates a threshold valve (18) which discharges the air separated from the condensate liquid in said condensate separator (12).

2. A device according to the aforementioned claim characterized in that said filter (32) to remove residual particles is placed upstream of said condensate separator (12).

3. A device according to either of the previous claims in which said condensate separator (12) is of the automatic discharge type.

4. A device according to any of the aforementioned claims in which said condensate separator (12) for separating the condensate liquid from the air is connected to said coalescence separator (16) for separating the condensate water from the residual oil by way of a discharge valve (36) controlled by a liquid sensor (34) inside said condensate separator (12).

5. A method of using the device provided in any of previous claims comprising the steps of:
- filtering the condensate liquid upstream of the condensate separator;
- separating the condensate liquid from the air into the condensate separator (12);
- discharging the air separated from the condensate liquid in said condensate separator (12) upon reaching a predeterminated air pressure level in said condensate separator (12) in such a way that said predeterminated air pressure level is able to provide said condensate liquid with the pressure required for it to be appropriately separated in the coalescence separator (16);
- discharging the condensate liquid from the condensate separator (12) into the coalescence separator (16); and
- separating the condensate water from residual oil into the coalescence separator (16).

6. A method according to the previous claim wherein the discharging, during the step of discharging the condensate liquid from the condensate separator (12) into the coalescence separator (16), occurs at predeterminated time by a timed control device (38).

7. A method according to claims 5 and 6 wherein the discharging, during the step of discharging the air separated from the condensate liquid, occurs at a predeterminated air pressure level which is lower than the air pressure level of the system to which the device is connected.

## Patentansprüche

1. Eine Vorrichtung zum Abscheiden von Ölrückständen aus einem Kondensat in Druckluftanlagen desjenigen Typs, der einen Kondensatabscheider (12) umfaßt, der das Kondensat von der Luft trennt und an einen Koaleszenzabscheider (16) angeschlossen ist, in dem das Kondenswasser des Kondensats von den Ölrückständen getrennt wird, dadurch gekennzeichnet, daß die Vorrichtung ebenfalls einen Filter (32) umfaßt, um die Restteilchen zu entfernen, sowie ein Schwellenventil (18), das die aus dem Kondensat abgeschiedene Luft in den genannten Kondensatabscheider (12) abläßt.

2. Eine Vorrichtung gemäß dem zuvor genannten Anspruch, dadurch gekennzeichnet, daß der genannte Filter (32) für die Entfernung der Restteilchen stromaufwärts von dem genannten Kondensatabscheider (12) angeordnet ist.

3. Eine Vorrichtung gemäß den beiden zuvor genannten Ansprüchen, wobei der genannte Kondensatabscheider (12) ein Typ mit automatischem Ablaß ist.

4. Eine Vorrichtung gemäß einem beliebigen der zuvor genannten Ansprüche, wobei der genannte Kondensatabscheider (12) zum Abscheiden des Kondensats von der Luft mit dem genannten Koaleszenzabscheider (16) zum Abscheiden des Kondenswassers von den Ölrückständen über ein Ablaßventil (36), das durch einen Flüssigkeitssensor (34) im Innern des genannten Kondensatabscheiders (12) gesteuert wird, verbunden ist.

5. Eine Methode zur Verwendung der Vorrichtung, die in jedem der zuvor genannten Ansprüche vorgesehen ist und folgende Schritte umfaßt:
- Filtern des Kondensats stromaufwärts vom Kondensatabscheider;
- Abscheiden des Kondensats von der Luft in den Kondensatabscheider (12);
- Ablaß der vom Kondensat im besagten Kondensatabscheider (12) abgeschiedenen Luft bei Erreichung eines vorbestimmten Druckpegels im besagten Kondensatabscheider (12), und zwar so, daß der genannte Luftdruckpegel das genannte Kondensat mit dem Druck versorgen kann, der erforderlich ist, damit es im Koaleszenzabscheider (16) entsprechend abgeschieden werden kann;
- Ablaß des Kondensats aus dem Kondensatabscheider (12) in den Koaleszenzabscheider (16); und
- Abscheiden des Kondenswassers von den Ölrückständen in den Koaleszenzabscheider (16).

6. Eine Methode gemäß dem zuvor genannten Anspruch, wobei der Ablaß während des Schritts des Ablassens des Kondensats aus dem Kondensatabscheider (12) in den Koaleszenzabscheider (16) über eine Zeitsteuerungs-Vorrichtung (38) erfolgt, und zwar zu einer vorbestimmten Zeit.

7. Eine Methode gemäß den Ansprüchen. 5 und 6, wobei der Ablaß während des Schritts des Ablassens der vom Kondensat abgeschiedenen Luft bei einem vorbestimmten Luftdruckpegel erfolgt, der niedriger als der Luftdruckpegel des Systems ist, an das die Vorrichtung angeschlossen ist.

## Revendications

1. Un dispositif pour séparer des huiles résiduelles d'un liquide de condensation dans des systèmes d'air comprimé du type qui incorpore un séparateur de condensat (12) pour séparer le liquide de condensation de l'air, connecté à un séparateur à coalescence (16) dans lequel l'eau de condensation du liquide de condensation est séparée de l'huile résiduelle, caractérisé par le fait que le dispositif comprend aussi un filtre (32) pour enlever les particules résiduelles et qu'il incorpore une soupape à seuil (18) qui décharge l'air séparé du liquide de condensation dans ledit séparateur de condensat (12).

2. Un dispositif conformément à la revendication précédente caractérisé par le fait que ledit filtre (32) pour enlever les particules résiduelles a été placé en amont dudit séparateur de condensat (12).

3. Un dispositif conformément aux deux revendications précédentes dans lequel ledit séparateur de condensat (12) est du type à déchargement automatique.

4. Un dispositif conformément à l'une quelconque des revendications précédentes dans lequel ledit séparateur de condensat (12) pour séparer le liquide de condensation de l'air est connecté audit séparateur à coalescence (16) pour séparer l'eau de condensation de l'huile résiduelle au moyen d'une soupape d'échappement (36) contrôlée par un capteur de liquide (34) à l'intérieur dudit séparateur de condensat (12).

5. Une méthode pour utiliser le dispositif fourni dans l'une quelconque des revendications précédentes comprenant les étapes de :
- filtration du liquide de condensation en amont du séparateur de condensat ;
- séparation du liquide de condensation de l'air à l'intérieur du séparateur de condensat (12) ;
- déchargement de l'air séparé du liquide de condensation dans ledit séparateur de condensat (12) à l'obtention d'un niveau préétabli de pression de l'air dans ledit séparateur de condensat (12) de manière à ce que ledit niveau de pression de l'air prédéterminé soit en mesure de fournir audit liquide de condensation la pression qui lui est nécessaire pour être adéquatement séparé dans le séparateur à coalescence (16) ;
- déchargement du liquide de condensation du séparateur de condensat (12) à l'intérieur du séparateur à coalescence (16); et
- séparation de l'eau de condensation de l'huile résiduelle à l'intérieur du séparateur à coalescence (16).

6. Une méthode, conformément à la revendication précédente dans laquelle le déchargement durant l'étape de déchargement du liquide de condensation du séparateur de condensation (12) dans le séparateur à coalescence (16) a lieu à des temps préétablis par un dispositif de contrôle temporisé (38).

7. Une méthode, conformément aux revendications 5 et 6 dans laquelle le déchargement durant l'étape de déchargement de l'air séparé du liquide de condensation, a lieu à un niveau de pression de l'air préétabli qui est inférieur au niveau de la pression de l'air du système auquel le dispositif est connecté.
